# EUROPEAN PATENT APPLICATION

(11) **EP 4 792 970 A1**
(43) Date of publication of application: **19.08.2026**
(21) Application number: 26157877.7
(22) Date of filing: 11.02.2026
(51) Int. Cl.: B23K 26/142, B23K 26/14, B23K 26/38

(54) **LASER APPARATUS AND SUCTION NOZZLE**

(30) Priority: 13.02.2025 JP 2025021731
(71) Applicant: TAIKISHA LTD., Tokyo 160-6129 (JP)
(72) Inventor: HIGASHI, Yoshio, Tokyo, 1606129 (JP); SAKITA, Kenji, Tokyo, 1606129 (JP); SUZUKI, Hiroyuki, Tokyo, 1606129 (JP); TAKIZAWA, Yukiya, Tokyo, 1606129 (JP); WATANABE, Seidai, Tokyo, 1606129 (JP)
(74) Representative: Mathys & Squire

(57) **Abstract**

A laser apparatus comprising: laser irradiation means (110) configured to cut a target object (40); and a suction nozzle (120) configured to suck fume generated at the time of cutting the target object, wherein a suction port (30) of the suction nozzle is arranged near an irradiation port of the laser irradiation means.

## Description

### BACKGROUND OF THE INVENTION

### Field of the Invention

The present invention relates to a laser apparatus and a suction nozzle.

### Description of the Related Art

When performing processing using a laser apparatus, toxic fume (smoke), for example, hydrogen chloride or hydrogen cyanide may be generated. In addition, a laser beam may be scattered to attenuate due to fume. When cutting, by a laser, a film pasted to the surface of a target object, the heat of fume may influence a position different from a cut position on the film (for example, the heat may burn the film surface). Therefore, it is desired to quickly recover fume before fume influences its periphery.

Japanese Patent Laid-Open No. 2024-104430 discloses a thermal processing apparatus that recovers products (dust) generated along with thermal processing.

However, in the technique described in Japanese Patent Laid-Open No. 2024-104430, since a laser head 11 and an exhaust portion 13 are located at positions separated from each other, it is difficult to early recover toxic fume generated when processing a target object by a laser, and it may be impossible to recover all the toxic fume. Thus, fume remaining in a laser irradiation direction may attenuate the laser irradiation effect.

### SUMMARY OF THE INVENTION

The present invention has been made to solve the above-described problem, and provides a technique of early recovering toxic fume generated when processing a target object by a laser and of suppressing attenuation of the laser irradiation effect.

The present invention in its first aspect provides a laser apparatus as specified in any one of claims 1 to 11.

The present invention in its second aspect provides a suction nozzle as specified in claim 12.

### BRIEF DESCRIPTION OF THE DRAWINGS

Fig. 1 is a view showing an example of the configuration of a laser apparatus according to an embodiment;
Fig. 2 is a view showing an example of the outer appearance of a portion of a blowing nozzle according to the embodiment;
Fig. 3 is an explanatory view of a suction port according to the embodiment; and
Fig. 4 is a view showing the configuration of the blowing nozzle according to a modification.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

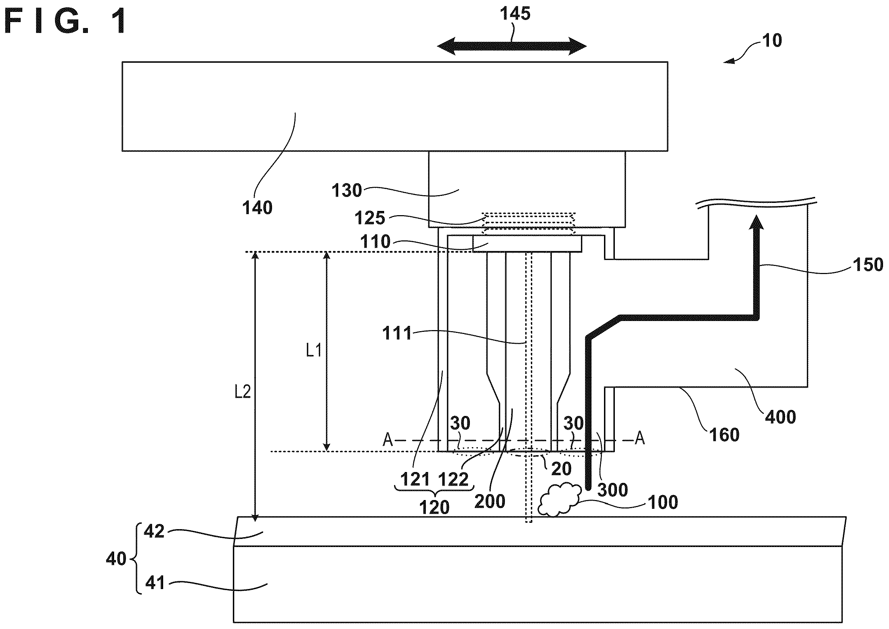

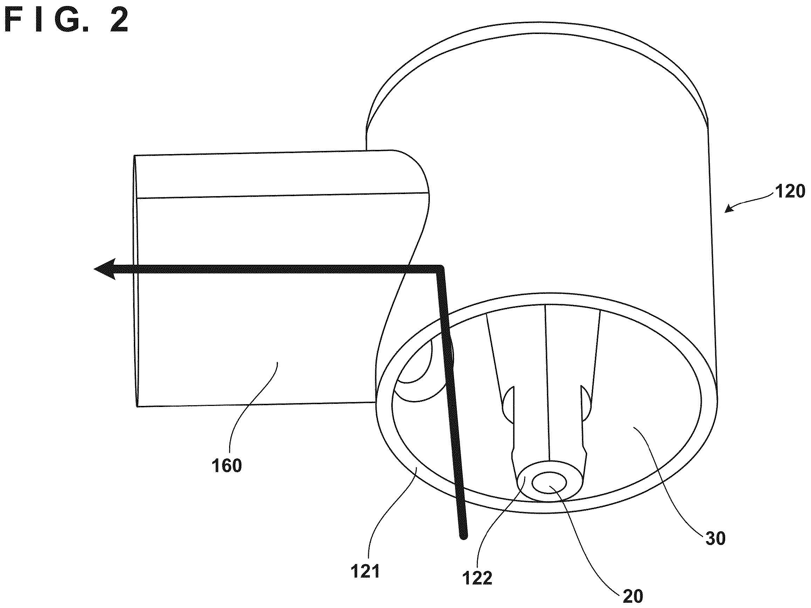

Fig. 1 is a view showing an example of the configuration of a laser apparatus according to an embodiment. Fig. 2 is a view showing an example of the outer appearance of a portion of a blowing nozzle according to the embodiment. A laser apparatus 10 is an apparatus for performing trimming by irradiating a target object 40 with a laser 111. The target object 40 is, for example, a part obtained by pasting a decorative film 42 to an automobile part 41. It is possible to perform processing of cutting and removing the unnecessary decorative film 42 using the laser apparatus 10.

The laser apparatus 10 includes a laser irradiation unit 110 for cutting the target object 40, and a suction nozzle 120 for sucking fume 100 generated at the time of cutting the target object 40. In addition, the laser apparatus 10 includes an attachment 130 for attaching the suction nozzle 120 and the laser irradiation unit 110, and a support member 140 that supports the attachment 130. The suction nozzle 120 may be made of a metal, and may be subjected to anti-corrosion coating. A suction port 30 of the suction nozzle 120 is arranged near an irradiation port 20 of the laser irradiation unit 110. In other words, the suction port 30 is arranged around the irradiation port 20. The support member 140 has an end portion connected to another control apparatus (not shown), and can move in an arbitrary direction within a plane intersecting a vertical direction, more specifically, within a horizontal plane under the control of the other control apparatus. With the movement of the support member 140, the laser irradiation unit 110 can move to execute desired trimming.

The laser irradiation unit 110 performs irradiation with the laser 111 via a space 200 inside a first cylindrical portion 122. The irradiation direction of the laser 111 is the vertical downward direction in the example shown in Fig. 1. The laser irradiation unit 110 performs irradiation with the laser 111 at a predetermined distance (for example, about 40 mm) from the target object 40. L2 represents a focal length (for example, about 120 mm to 130 mm) of the laser 111 emitted from the laser 111.

The suction nozzle 120 includes the first cylindrical portion 122 centered on a laser irradiation axis (an axis extending in the irradiation direction of the laser 111), and a second cylindrical portion 121 centered on the laser irradiation axis. The suction nozzle 120 can suck the fume 100 via a space 300 outside the first cylindrical portion 122 and inside the second cylindrical portion 121. L1 represents a length of the first cylindrical portion 122 in the vertical direction, and can be set to, for example, about 80 mm. The fume 100 is sucked along an arrow 150, and is guided through a pipeline 160 connected to the side portion of the second cylindrical portion 121 or extending from the side portion.

As described above, the suction nozzle 120 includes the pipeline 160 extending from a part of the second cylindrical portion 121 toward the outside of the suction nozzle 120, and the space 300 outside the first cylindrical portion 122 and inside the second cylindrical portion 121 fluidly communicates with a space 400 in the pipeline 160. The pipeline 160 may be partially formed by a flexible member (for example, a hose made of an elastic member), and guides the sucked fume 100 to outside a work environment. The suction nozzle 120 may be detachable. More specifically, the suction nozzle 120 may be detachable from the attachment 130 and the laser irradiation unit 110 while they are fixed. Alternatively, the suction nozzle 120 and the laser irradiation unit 110 may be formed integrally, and detachable from the attachment 130. For example, the suction nozzle 120 and the laser irradiation unit 110 may be configured to be attached to the attachment 130 via a screw portion 125. By making the parts detachable, it is possible to quickly replace them with parts for maintenance or parts for robot teaching.

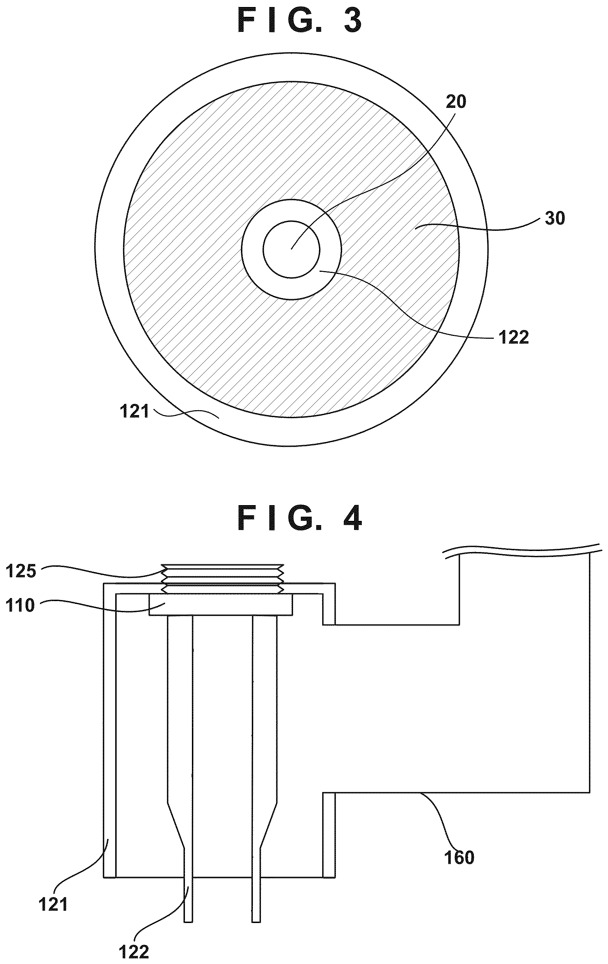

Fig. 3 is an explanatory view of the suction port according to the embodiment. Fig. 3 shows a sectional view taken along a line A - A in Fig. 1. The sectional area (an area capable of sucking the fume 100) of the suction port 30 corresponds to the area of a hatched portion. The sectional area of the suction port 30 can be the difference between the sectional area of the second cylindrical portion 121 and that of the first cylindrical portion 122. More specifically, the sectional area of the suction port 30 can be the difference between the area of a circle corresponding to the inner wall portion of the second cylindrical portion 121 and the area of a circle corresponding to the outer wall portion of the first cylindrical portion 122. That is, the suction port 30 is an opening having the area that is the difference between the area of the circle corresponding to the inner wall portion of the second cylindrical portion 121 and the area of the circle corresponding to the outer wall portion of the first cylindrical portion 122. The difference may be an arbitrary value between 1,000 mm² and 1,500 mm², and may particularly be 1,250 mm².

Suction from the suction port 30 can be performed by operating a suction apparatus (not shown). A control apparatus that controls the suction operation of the suction apparatus (not shown), the irradiation operation of the laser 111, and movement of the laser apparatus 10 in the horizontal and vertical directions may be provided. The laser apparatus 10 may include the control apparatus, or the control apparatus may be separated from the laser apparatus 10. Under the control of the control apparatus, suction by the suction apparatus and the irradiation operation of the laser 111 may be synchronized with each other. For example, during irradiation with the laser 111, it may be controlled to execute suction by the suction apparatus simultaneously. Since this executes suction when irradiation with the laser is performed and fume may be generated, it is possible to suppress omission of recovery of fume. Alternatively, in consideration of a time lag from when the operation of the suction apparatus starts until suction actually starts, it may be controlled to start the operation of the suction apparatus a predetermined time before laser irradiation starts. The operation of the control apparatus can be implemented when a computer reads out a program stored in a memory and executes it.

As described above, according to this embodiment, it is possible to early suck and recover, near a processing position, toxic fume generated when processing a target object by a laser. Therefore, it is possible to suppress attenuation or scattering of a laser beam caused by remaining fume, thereby maintaining effective laser output.

Furthermore, by providing the suction port 30 of the suction nozzle 120 to surround the irradiation port 20 of the laser irradiation unit 110, it is possible to suck fume while covering the irradiation position of the laser 111, that is, the fume generation position. Thus, it is possible to efficiently recover the fume and suppress occurrence of omission of recovery.

In addition, to trim a target object such as an automobile part that often has a complicated three-dimensional shape, it is necessary to move the laser irradiation unit 110 in accordance with the shape of the target object. On the other hand, according to this embodiment, since the laser irradiation unit 110 and the suction nozzle 120 move integrally, even if the laser apparatus 10 is moved, the suction nozzle 120 is always located near the laser irradiation unit 110, and it is thus possible to efficiently recover fume.

### [Modification]

Note that this embodiment has explained an example in which the first cylindrical portion 122 and the second cylindrical portion 121 are coaxial, but the present invention is not limited to this, and they may be almost coaxial or non-coaxial. In addition, the present invention is not limited to anti-corrosion coating, and the suction nozzle 120 may be subjected to coating that makes it difficult for a film to be pasted. In the example shown in Figs. 1 to 3, the pipeline 160 extends from the side portion of the second cylindrical portion 121 toward the outside of the suction nozzle 120, but the present invention is not limited to this. For example, the pipeline 160 may extend from an upper portion, contacting the attachment 130, of the second cylindrical portion 121 toward the outside of the suction nozzle 120. In this case, the pipeline 160 may extend through the interior of the attachment 130 and the interior of the support member 140 to a recovery position.

The configuration of the suction nozzle 120 is not limited to that shown in Fig. 1. Fig. 4 is a view showing the configuration of the blowing nozzle according to the modification. The end portion of the first cylindrical portion 122 may protrude from the end portion of the second cylindrical portion 121. That is, the end face of the irradiation port 20 may protrude from the end face of the suction port 30. Thus, the distance between the irradiation port of the laser 111 (that is, the end portion of the first cylindrical portion 122) and the target object 40 is reduced, and a distance influenced by fume can be shortened. Therefore, it is possible to suppress scattering of the laser beam caused by fume.

According to the present invention, it is possible to early recover toxic fume generated when processing a target object by a laser, and suppress attenuation of the laser irradiation effect.

The invention is not limited to the foregoing embodiments, and various variations/changes are possible within the spirit of the invention.

## Claims

1. A laser apparatus comprising:
laser irradiation means (110) configured to cut a target object (40); and
a suction nozzle (120) configured to suck fume generated at the time of cutting the target object,
wherein a suction port (30) of the suction nozzle is arranged near an irradiation port of the laser irradiation means.

2. The apparatus according to claim 1, wherein the suction port is arranged around the irradiation port.

3. The apparatus according to claim 1,
wherein the suction nozzle includes
a first cylindrical portion (122) centered on a laser irradiation axis, and
a second cylindrical portion (121) arranged around the first cylindrical portion, and
wherein the suction nozzle sucks the fume via a space outside the first cylindrical portion and inside the second cylindrical portion.

4. The apparatus according to claim 3, wherein the laser irradiation means performs irradiation with a laser via a space inside the first cylindrical portion.

5. The apparatus according to claim 4, wherein the laser irradiation means performs the irradiation with the laser at a predetermined distance from the target object.

6. The apparatus according to claim 3, wherein an end face of the first cylindrical portion protrudes from an end face of the second cylindrical portion toward the target object.

7. The apparatus according to claim 3,
wherein the suction nozzle includes a pipeline (160) extending from a part of the second cylindrical portion toward an outside of the suction nozzle, and
wherein the space outside the first cylindrical portion and inside the second cylindrical portion fluidly communicates with a space in the pipeline.

8. The apparatus according to claim 3, wherein a sectional area of the space outside the first cylindrical portion and inside the second cylindrical portion is larger than 1,000 mm² and smaller than 1,500 mm².

9. The apparatus according to claim 8, wherein the sectional area is 1,250 mm².

10. The apparatus according to claim 1, wherein the suction nozzle is made of a metal, and is subjected to anti-corrosion coating.

11. The apparatus according to claim 1, wherein the suction nozzle is detachable from the laser irradiation means.

12. A suction nozzle (120) for sucking fume generated at the time of irradiating a target object (40) with a laser, comprising:
a first cylindrical portion (122) centered on a laser irradiation axis and through which a laser passes;
a second cylindrical portion (121) arranged around the first cylindrical portion; and
a suction port (30) configured to suck the fume via a space outside the first cylindrical portion and inside the second cylindrical portion.
